(19) Europäisches Patentamt
European Patent Office
Office européen des brevets

(11) **EP 3 323 025 B1**

(12) **EUROPÄISCHE PATENTSCHRIFT**

(45) Veröffentlichungstag und Bekanntmachung des Hinweises auf die Patenterteilung:
**11.11.2020   Patentblatt 2020/46**

(21) Anmeldenummer: **16769956.0**

(22) Anmeldetag: **16.09.2016**

(51) Int Cl.:
**G05B 13/02** *(2006.01)*

(86) Internationale Anmeldenummer:
**PCT/EP2016/072005**

(87) Internationale Veröffentlichungsnummer:
**WO 2017/050659 (30.03.2017 Gazette 2017/13)**

(54) **VERFAHREN UND VORRICHTUNG ZUM BETREIBEN EINES TECHNISCHEN SYSTEMS**

METHOD AND DEVICE FOR OPERATING A TECHNICAL SYSTEM

PROCÉDÉ ET DISPOSITIF DE FONCTIONNEMENT D'UN SYSTÈME TECHNIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2015   DE 102015218472**

(43) Veröffentlichungstag der Anmeldung:
**23.05.2018   Patentblatt 2018/21**

(73) Patentinhaber: **Siemens Aktiengesellschaft
80333 München (DE)**

(72) Erfinder:
• **FISCHER, Jan
81541 München (DE)**
• **PIRSING, Andreas
16766 Sommerfeld (DE)**
• **SCHENK, Tim
84034 Landshut (DE)**
• **SOHR, Annelie
81929 München (DE)**

(56) Entgegenhaltungen:
• **JAN MATTM PRG A[1/4]LLER ET AL: "Calculating a near time-optimal jerk-constrained trajectory along a specified smooth path", THE INTERNATIONAL JOURNAL OF ADVANCED MANUFACTURING TECHNOLOGY, SPRINGER, BERLIN, DE, Bd. 45, Nr. 9-10, 19. April 2009 (2009-04-19), Seiten 1007-1016, XP019755900, ISSN: 1433-3015, DOI: 10.1007/S00170-009-2032-9**
• **ANDREWS M ET AL: "Optimal utility based multi-user throughput allocation subject to throughput constraints", INFOCOM 2005. 24TH ANNUAL JOINT CONFERENCE OF THE IEEE COMPUTER AND CO MMUNICATIONS SOCIETIES. PROCEEDINGS IEEE MIAMI, FL, USA 13-17 MARCH 2005, PISCATAWAY, NJ, USA,IEEE, PISCATAWAY, NJ, USA, Bd. 4, 13. März 2005 (2005-03-13), Seiten 2415-2424, XP010829270, DOI: 10.1109/INFCOM.2005.1498527 ISBN: 978-0-7803-8968-7**

**EP 3 323 025 B1**

**Beschreibung**

Die vorliegende Erfindung betrifft ein Verfahren zum Betreiben eines technischen Systems mit einer Anzahl von mittels Steuergrößen steuerbaren Komponenten während eines eine Vielzahl von Optimierungszeiträumen umfassenden Steuerungszeitraums. Des Weiteren betrifft die vorliegende Erfindung ein Computerprogrammprodukt zur Durchführung eines solchen Verfahrens sowie eine Vorrichtung zum Betreiben eines technischen Systems mit einer Anzahl von mittels Steuergrößen steuerbaren Komponenten während eines eine Vielzahl von Optimierungszeiträumen umfassenden Steuerungszeitraums.

Zum Betreiben eines technischen Systems, wie beispielsweise eines Wassernetzwerks oder eines Energieversorgungsnetzwerks, werden häufig Optimierungs-Algorithmen oder mathematische Optimierungsverfahren eingesetzt. Die Optimierungs-Algorithmen werden verwendet, um ein vorbestimmtes Ziel zu erreichen, insbesondere eine Zielfunktion zu minimieren oder maximieren. Für das Beispiel eines Wassernetzwerks kann die Zielfunktion beispielsweise die Minimierung eines Energieverbrauchs für das Pumpen und Behandeln des Wassers betreffen. Mittels des Optimierungs-Algorithmus werden bestimmte Steuergrößen optimiert, welche zum Einstellen der steuerbaren Komponenten des technischen Systems, beispielsweise von Pumpen und Ventilen des Wassernetzwerks, dienen. Mittels der Optimierung können Steuerpläne für alle steuerbaren Prozesse oder Komponenten in dem netzwerkartigen System generiert werden, häufig für einen relativ kurzen Optimierungszeitraum, beispielsweise von 24 Stunden.

Um geeignete Steuerpläne bereitstellen zu können, hat der Optimierungs-Algorithmus einige technische Randbedingungen oder Nebenbedingungen in Betracht zu ziehen, beispielsweise bestimmte Grenzwerte für die steuerbaren Komponenten, wie Pumpen oder Ventilen. Weitere Beispiele hierfür sind Minimal- oder Maximalwerte von Systemgrößen, wie z.B. vorbestimmte Schwellwerte für Kapazitäten von Verarbeitungsschritten des Wassers oder minimale oder maximale Füllstände von Speichern für das Beispiel eines Wassernetzwerks. Viele dieser Bedingungen können direkt oder auch innerhalb eines kurzen Optimierungszeitraums von beispielsweise 24 Stunden evaluiert werden. Allerdings existieren auch Randbedingungen oder Nebenbedingungen, die einen größeren Beobachtungshorizont bedingen, beispielsweise von einigen Wochen, Monaten oder Jahren. Beispiele für solche langzeitigen Nebenbedingungen sind Produktionsziele, wie ein bestimmter Wasserfluss pro Monat oder maximale Betriebszeiten von Pumpen pro Monat oder Jahr. Solche langzeitigen Nebenbedingungen können innerhalb eines demgegenüber kürzeren Optimierungszeitraums nicht durch konventionelle Randbedingungen modelliert werden. Ein einfacher Ansatz um langzeitige Nebenbedingungen in Betracht zu ziehen ist, den Optimierungszeitraum auf diesen langzeitigen Zeitraum auszudehnen. Dies resultiert nachteiligerweise allerdings in einer verlängerten Ausführungszeit des Optimierungs-Algorithmus, welche beispielsweise in einigen Anwendungen auch zu lang sein kann. Dies wird auch in ANDREWS M ET AL: "Optimal utility based multi-user throughput allocation subject to throughput constraints"; INFOCOM 2005, ISBN: 978-0-7803-8968-7 sowie in JAN MATTMÜLLER ET AL: "Calculating a near time-optimal jerk-constrained trajectory along a specified smooth path"; THE INTERNATIONAL JOURNAL OF ADVANCED MANUFACTURING TECHNOLOGY, SPRINGER, BERLIN, Bd. 45, Nr. 9-10, 19. April 2009 gezeigt.

Ein weiterer herkömmlicher Ansatz um langzeitige Nebenbedingungen zu verarbeiten ist, diese in einfache harte Randbedingungen innerhalb des kürzeren Optimierungszeitraums zu transformieren. Dies kann durch einfache arithmetische Operationen oder stochastische Verteilungen realisiert werden. Allerdings haben diese Ansätze den Nachteil, nicht immer die beste Lösung für den Betrieb des Wassernetzwerks über den gesamten Steuerungszeitraum bereitstellen zu können.

Vor diesem Hintergrund besteht eine Aufgabe der vorliegenden Erfindung darin, das Betreiben eines technischen Systems, wie beispielsweise eines Wassernetzwerks, zu verbessern.

Demgemäß wird ein Verfahren zum Betreiben eines technischen Systems mit einer Anzahl von mittels Steuergrößen steuerbaren Komponenten während eines eine Vielzahl von Optimierungszeiträumen umfassenden Steuerungszeitraums vorgeschlagen. Das Verfahren umfasst die folgenden Schritte:

Ermitteln zumindest einer optimierten Steuergröße zu einem jeden der Optimierungszeiträume zur Minimierung oder Maximierung einer Zielfunktion des Systems derart, dass zumindest eine Systemgröße eine Anzahl von vorbestimmten, auf den Steuerungszeitraum bezogenen Nebenbedingungen erfüllt, wobei das Ermitteln umfasst:

- Aufstellen einer Bewertungsfunktion für eine jede der Nebenbedingungen zum Bewerten einer Änderung der Systemgröße zum Ende des Optimierungszeitraums basierend auf einem aktuellen Wert der Systemgröße zu Beginn des Optimierungszeitraums, einem auf die Nebenbedingung bezogenen und über den Steuerungszeitraum maximal erzielbaren Gradienten der Systemgröße und einem auf die Nebenbedingung bezogenen und über den Steuerungszeitraum minimal erzielbaren Gradienten der Systemgröße, und
- Anwenden eines Optimierungs-Algorithmus zur Minimierung oder Maximierung der Zielfunktion unter Verwendung der aufgestellten Bewertungsfunktionen, wobei die zumindest eine Systemgröße als Systemantwort auf die zumindest eine optimierte Steuergröße der steuerbaren Komponenten ermittelt wird, und

2

Einstellen der zumindest einen ermittelten optimierten Steuergröße zum Betrieb der steuerbaren Komponenten.

Das technische System ist beispielsweise ein netzwerkartiges System, wie ein Wassernetzwerk oder ein Energieversorgungsnetzwerk. Die steuerbaren Komponenten, beispielsweise eines Wassernetzwerks, sind insbesondere Pumpen und Ventile. Der Optimierungszeitraum des Optimierungs-Algorithmus kann auch als Optimierungshorizont bezeichnet werden. Für das Beispiel des Wassernetzwerks kann der Optimierungszeitraum beispielsweise 24 Stunden betragen. Der Steuerungszeitraum kann auch als Beobachtungszeitraum oder Beobachtungshorizont betrachtet werden und beträgt beispielsweise 30 Tage. Für dieses Beispiel umfasst der Steuerungszeitraum 30 Optimierungszeiträume.

Die Systemgröße ist beispielsweise für ein Wassernetzwerk ein akkumulierter Wasserfluss an einer bestimmten Stelle des Wassernetzwerks, zum Beispiel an einer Pumpe. Mittels einer Steuergröße wird dann die Pumpe angesteuert.

Die auf den Steuerungszeitraum bezogene Nebenbedingung kann aufgrund ihres Bezugs auf den Steuerungszeitraum, welcher deutlich größer als der Optimierungszeitraum ist, auch als Langzeit-Nebenbedingung bezeichnet werden.

Gemäß dem vorliegenden Verfahren werden für Langzeit-Nebenbedingungen Bewertungsfunktionen, insbesondere mit Funktionswerten zwischen 0 und 1 aufgestellt, wobei für die jeweilige Bewertungsfunktion eine Straffunktion (penalty function) aufstellbar ist, welche als Summand auf einfache Weise zu der Zielfunktion addierbar ist.

Danach werden Langzeit-Nebenbedingungen bei der Anwendung der Optimierung zu einem jeden Optimierungszeitraum adäquat berücksichtigt. Insbesondere werden die Langzeit-Nebenbedingungen berücksichtigt, ohne dass der Optimierungszeitraum erweitert oder verlängert werden müsste. Dadurch wird bei dem vorliegenden Verfahren auch der notwendige Rechenaufwand kaum vergrößert. Aus diesem Grund ist die Machbarkeit der vorliegenden Optimierung auch für eine Online-Anwendung sichergestellt.

Im Gegensatz zu herkömmlichen Ansätzen werden beim vorliegenden Verfahren Langzeit-Nebenbedingungen nicht auf kleinere Optimierungszeiträume heruntergebrochen, beispielsweise durch einfache arithmetische Operationen, wie durch Gleichverteilung. Gegenüber solchen herkömmlichen Ansätzen ist das vorliegende Verfahren deutlich flexibler. Des Weiteren wird vorliegend durch die aufgestellte Bewertungsfunktion eine einfache Schnittstelle zu dem Optimierungs-Algorithmus bereitgestellt, da die Bewertungsfunktion insbesondere nur Funktionswerte zwischen 0 und 1 aufweist, die an den Optimierungs-Algorithmus zu übergeben sind. Aus diesem Grund ist es nicht notwendig, den Optimierungs-Algorithmus abzuändern. Wie oben bereits ausgeführt, wird nur eine Straffunktion basierend auf der aufgestellten Bewertungsfunktion der Zielfunktion hinzuaddiert. Folglich ist nur ein Vorbereitungsschritt nötig, welcher die Bewertungsfunktion in eine gültige Straffunktion transformiert, welche vorbestimmte und algorithmusspezifische Rahmenbedingungen erfüllt. Ein Beispiel für einen Optimierungs-Algorithmus stellt der SQP-Algorithmus dar (SQP; Sequential Quadratic Programming).

Für jede Langzeit-Nebenbedingung (und gegebenenfalls akkumulierte Werte) wird eine Bewertungsfunktion aufgestellt. Dabei werden maximale und minimale Gradienten der Systemgröße aufgestellt, insbesondere mittels Ableitung aus technischen und logischen Randbedingungen. Beispielsweise kann eine Pumpe höchstens 24 Stunden am Tag abzüglich der Wartungszeit laufen. Ein anderes Beispiel ist, dass der maximale Wasserfluss durch eine Pumpe die Summe von Wasser ist, wenn die Pumpe konstant für 24 Stunden läuft. Neben solchen linearen und konstanten Gradienten ist es auch möglich, nicht-lineare Grenzen einer beliebigen Progression vorauszusagen. Wenn beispielsweise eine bestimmte Zeitdauer für die Wartung zu einem bestimmten Zeitpunkt geplant ist, kann der Gradient als horizontale Linie für diese Zeitdauer modelliert werden.

Die jeweilige Bewertungsfunktion wird zu Beginn des Steuerungszeitraums vorzugsweise einmal aufgestellt, um dann für einen jeden der Optimierungszeiträume innerhalb des Steuerungszeitraums verwendet zu werden.

Gemäß einer Ausführungsform liegt der Wertebereich der Bewertungsfunktion zwischen 0 und 1.

Gemäß einer weiteren Ausführungsform beschreibt die Systemgröße einen akkumulierten Wert über den Steuerungszeitraum. Gemäß einer weiteren Ausführungsform ist die Bewertungsfunktion dazu eingerichtet, die Langzeit-Nebenbedingung aufgrund der Änderung der akkumulierten Systemgröße in dem Optimierungszeitraum zu bewerten (zu evaluieren).

Hierbei ist die Bewertungsfunktion eingeführt, um den akkumulierten Wert der Systemgröße am Ende des jeweils aktuellen kurzfristigen Optimierungszeitraums zu bewerten oder zu evaluieren.

Gemäß einer weiteren Ausführungsform werden vor dem Aufstellen der Bewertungsfunktion solche Änderungen der Systemgröße ausgeschlossen, die einen aufgrund des über den Steuerungszeitraum maximal erzielbaren Gradienten der Systemgröße und aufgrund des über den Steuerungszeitraum minimal erzielbaren Gradienten der Systemgröße bestimmten Wert der Systemgröße bedingen, welcher die Langzeit-Nebenbedingung nicht erfüllt.

Hierdurch werden gültige Verteilungen der Änderung der Systemgröße bestimmt. Eine Verteilung oder ein Wert der Systemgröße ist - wie oben ausgeführt - ungültig, wenn er zu einer Situation führt, in welcher die Bedingung nicht mehr erfüllt werden kann, unabhängig von zukünftigen Optimierungsschritten.

Gemäß einer weiteren Ausführungsform umfasst das Verfahren:

Aufstellen einer Straffunktion mit der aufgestellten Bewertungsfunktion als Argument,
Erweitern der Zielfunktion um die aufgestellte Straffunktion, und
Anwenden des Optimierungs-Algorithmus auf die erweiterte Zielfunktion.

Gemäß einer weiteren Ausführungsform wird die Bewertungsfunktion derart aufgestellt, dass ihr Funktionswert gleich 0 ist, wenn basierend auf dem maximal erzielbaren Gradienten der Systemgröße und basierend auf dem minimal erzielbaren Gradienten der Systemgröße sichergestellt ist, dass die Nebenbedingung ab dem aktuellen Zeitpunkt bis zum Ende des Steuerungszeitraums erfüllt ist.

Gemäß einer weiteren Ausführungsform wird die Bewertungsfunktion derart aufgestellt, dass ihr Funktionswert größer als 0 und kleiner gleich 1 ist, wenn basierend auf dem maximal erzielbaren Gradienten der Systemgröße und basierend auf dem minimal erzielbaren Gradienten der Systemgröße sichergestellt ist, dass die Nebenbedingung ab dem aktuellen Zeitpunkt bis zum Ende des Steuerungszeitraums weiterhin erfüllbar ist.

Gemäß einer weiteren Ausführungsform wird die Bewertungsfunktion derart aufgestellt, dass ihr Funktionswert gleich 1 wäre, wenn basierend auf dem maximal erzielbaren Gradienten der Systemgröße und basierend auf dem minimal erzielbaren Gradienten der Systemgröße sichergestellt ist, dass die Nebenbedingung ab einem aktuellen Zeitpunkt bis zum Ende des Steuerungszeitraums nicht (mehr) erfüllbar ist.

Gemäß einer weiteren Ausführungsform wird die Bewertungsfunktion für das Minimalwertproblem aufgestellt durch

$$X(\Delta V) = \begin{cases} \dfrac{V_2\,(t_0 + T_{opt}) - V_0 - \Delta V}{V_2\,(t_0 + T_{opt}) - V_1\,(t_0 + T_{opt})} \,, & falls\ \Delta V < V_1\big(t_0 + T_{opt}\big) - V_0 \\ 0 \quad , & sonst \end{cases}$$

wobei V die Systemgröße, $\Delta V$ die Änderung der Systemgröße, $t_0$ den aktuellen Zeitpunkt, $T_{opt}$ den Optimierungszeitraum, $V_0$ einen aktuellen Wert der Systemgröße zu Beginn des Optimierungszeitraums, $V_1$ einen über den Steuerungszeitraum maximal erzielbaren Gradienten der Systemgröße und $V_2$ einen über den Steuerungszeitraum minimal erzielbaren Gradienten der Systemgröße bezeichnen.

Gemäß einer weiteren Ausführungsform wird neben der Einführung der Bewertungsfunktion eine folgende harte Randbedingung ergänzt:

$$\Delta V \geq V_1\big(t_0 + T_{opt}\big) - V_0$$

Gemäß einer weiteren Ausführungsform wird die Bewertungsfunktion für das Maximalwertproblem aufgestellt durch

$$X(\Delta V) = \begin{cases} \dfrac{V_0 + \Delta V - V_1\,(t_0 + T_{opt})}{V_2\,(t_0 + T_{opt}) - V_1\,(t_0 + T_{opt})} \,, & falls\ \Delta V > V_1\big(t_0 + T_{opt}\big) - V_0 \\ 0 \quad , & sonst \end{cases}$$

Gemäß einer weiteren Ausführungsform wird neben der Einführung der Bewertungsfunktion eine folgende harte Randbedingung ergänzt:

$$\Delta V \leq V_2\big(t_0 + T_{opt}\big) - V_0$$

Gemäß einer weiteren Ausführungsform ist das technische System eine netzwerkartige Anlage, ein Energieversorgungsnetzwerk oder ein Wassernetz ist.

Gemäß einer weiteren Ausführungsform umfasst die Anzahl von steuerbaren Komponenten ein Ventil und/oder eine Pumpe.

Gemäß einer weiteren Ausführungsform umfasst die Anzahl von steuerbaren Komponenten einen Umrichter, einen Transformator, ein Kraftwerk und/oder Umspannwerk.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Ferner wird eine Vorrichtung zum Betreiben eines technischen Systems mit einer Anzahl von mittels Steuergrößen steuerbaren Komponenten während eines eine Vielzahl von Optimierungszeiträumen umfassenden Steuerungszeitraums vorgeschlagen. Die Vorrichtung umfasst eine erste Einheit und eine zweite Einheit. Die erste Einheit ist dazu eingerichtet, zumindest eine optimierte Steuergröße zu einem jeden der Optimierungszeiträume zur Maximierung oder Minimierung einer Zielfunktion des Systems derart zu ermitteln, dass zumindest eine Systemgröße eine Anzahl von vorbestimmten, auf den Steuerungszeitraum bezogenen Nebenbedingungen erfüllt, wobei das Ermitteln ein Aufstellen einer Bewertungsfunktion für eine jede der Nebenbedingungen zum Bewerten einer Änderung der Systemgröße zum Ende des Optimierungszeitraums basierend auf einem aktuellen Wert der Systemgröße zu Beginn des Optimierungszeitraums, einem auf die Nebenbedingung bezogenen und über den Steuerungszeitraum maximal erzielbaren Gradienten der Systemgröße und einem auf die Nebenbedingung bezogenen und über den Steuerungszeitraum minimal erzielbaren Gradienten der Systemgröße und ein Anwenden eines Optimierungs-Algorithmus zur Minimierung oder Maximierung der Zielfunktion unter Verwendung der aufgestellten Bewertungsfunktionen umfasst, wobei die zumindest eine Systemgröße als Systemantwort auf die zumindest eine optimierte Steuergröße der steuerbaren Komponenten ermittelt wird. Die zweite Einheit ist zum Einstellen der zumindest einen ermittelten optimierten Steuergröße zum Betrieb der steuerbaren Komponenten eingerichtet.

Die jeweilige Einheit, zum Beispiel die erste Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die für das vorgeschlagene Verfahren beschriebenen Ausführungsformen und Merkmale gelten für die vorgeschlagene Vorrichtung entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fig. 1 zeigt ein schematisches Ablaufdiagramm eines ersten Ausführungsbeispiels eines Verfahrens zum Betreiben eines technischen Systems;

Fig. 2 zeigt ein Diagramm zur Illustrierung eines Minimalwertproblems für den Systemparameter über den Steuerungszeitraum;

Fig. 3 zeigt ein Diagramm zur Illustrierung eines Maximalwertproblems für den Systemparameter über den Steuerungszeitraum;

Fig. 4 zeigt ein Diagramm zur Illustrierung möglicher Werte der Änderung des Systemparameters während eines Optimierungszeitraums innerhalb des Steuerungszeitraums;

Fig. 5 zeigt ein Diagramm zur Illustrierung der zeitlichen Verläufe des Systemparameters, des maximal erzielbaren Gradienten des Systemparameters und des minimal erzielbaren Gradienten des Systemparameters über den Steuerungszeitraum;

Fig. 6 zeigt ein Diagramm zur Illustrierung einer Bewertungsfunktion für die Nebenbedingung des minimal erzielbaren Gradienten des Systemparameters;

Fig. 7 zeigt ein schematisches Ablaufdiagramm eines zweiten Ausführungsbeispiels eines Verfahrens zum Betreiben eines technischen Systems; und

Fig. 8 zeigt ein schematisches Blockschaltbild einer Vorrichtung zum Betreiben eines technischen Systems.

In den Figuren sind gleiche oder funktionsgleiche Elemente mit denselben Bezugszeichen versehen worden, sofern nichts anderes angegeben ist.

In den nachfolgenden Figuren wird die Erfindung mitunter anhand des Beispiels eines Wassernetzwerks als technisches System mit Pumpen und Ventilen als Beispiele für steuerbare Komponenten beschrieben. Die Systemgröße ist beispielsweise ein über einen Steuerungszeitraum akkumulierter Wasserfluss an einer bestimmten Stelle des Wassernetzwerks, zum Beispiel an einer Pumpe. Mittels einer Steuergröße wird diese Pumpe angesteuert.

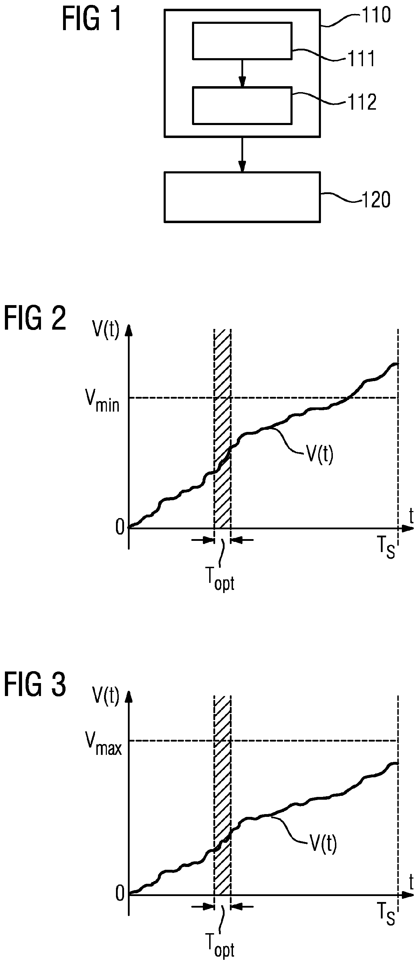

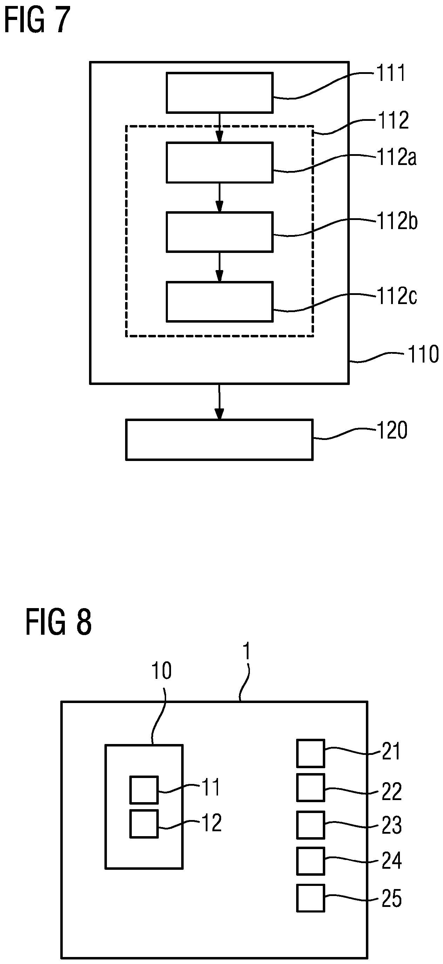

In Fig. 1 ist ein schematisches Ablaufdiagramm eines ersten Ausführungsbeispiels eines Verfahrens zum Betreiben eines technischen Systems 1 mit einer Anzahl von mittels Steuergrößen steuerbaren Komponenten 21 - 25 (siehe Fig. 8) während eines eine Vielzahl von Optimierungszeiträumen $T_{opt}$ umfassenden Steuerungszeitraums $T_S$ dargestellt.

Wie oben bereits ausgeführt, ist das technische System 1 beispielsweise ein Wassernetzwerk und die steuerbaren Komponenten umfassen beispielsweise Ventile und/oder Pumpen. Die Systemgröße V(t) beschreibt beispielsweise einen über den Steuerungszeitraum $T_S$ akkumulierten Wert des Wasserflusses an einer bestimmten Stelle des Wassernetzwerks.

Hierzu zeigt die Fig. 2 ein Diagramm zur Illustrierung eines Minimalwertproblems $V_{min}$ für die Systemgröße V(t) des akkumulierten Wasserflusses über den Steuerungszeitraum $T_S$. Das Minimalwertproblem beschreibt, dass der akkumulierte Wasserfluss V(t) am Ende des Steuerungszeitraums $T_S$ zumindest den Wert $V_{min}$ betragen muss.

In analoger Weise zeigt Fig. 3 ein Diagramm zur Illustrierung eines Maximalwertproblems $V_{max}$ für die Systemgröße V(t) über den Steuerungszeitraum $T_S$. Die Nebenbedingung $V_{max}$ beschreibt, dass der akkumulierte Wasserfluss V(t) am Ende des Steuerungszeitraums $T_S$ höchstens den Wert von $V_{max}$ betragen darf.

Zusammenfassend ist der Wert von $V(t = T_S)$ am Ende des Steuerungszeitraums $T_S$ vorzugsweise größer gleich $V_{min}$ und kleiner gleich $V_{max}$ sein. Des Weiteren zeigen die Fig. 2 und 3 einen aktuellen Optimierungszeitraum $T_{opt}$, welcher deutlich kleiner als der Steuerungszeitraum $T_S$ ist. Beispielsweise beträgt der Optimierungszeitraum $T_{opt}$ 24 Stunden, wohingegen der Steuerungszeitraum $T_S$ 30 Tage beträgt.

Das erste Ausführungsbeispiel des Verfahrens der Fig. 1 weist die Verfahrensschritte 110 und 120 auf.

In Schritt 110 wird ein Satz an optimierten Steuergrößen zum jeweiligen Optimierungszeitraum $T_{opt}$ zur Erzielung einer Minimierung oder Maximierung der Zielfunktion des Systems 1 derart ermittelt, dass die Systemgröße V(t) die beiden Nebenbedingungen $V_{min}$, $V_{max}$ erfüllt. Die Zielfunktion eines Wassernetzwerks als System 1 ist beispielsweise ein minimaler Energieverbrauch des Wassernetzwerks 1. Ohne Einschränkung der Allgemeinheit werden in diesem Beispiel nur zwei Nebenbedingungen, nämlich $V_{min}$ und $V_{max}$, diskutiert. Aus Gründen der Übersichtlichkeit wird die folgende Erläuterung auf die Nebenbedingung $V_{min}$ reduziert. Für die Nebenbedingung $V_{max}$ wird das Verfahren analog ausgeführt.

Der Schritt 110 umfasst den Schritt 111 für eine jede der Nebenbedingungen $V_{min}$, $V_{max}$ und den Schritt 112. Der Schritt 111 wird zu Beginn des Steuerungszeitraums $T_S$ einmalig ausgeführt. Der Schritt 112 wird zu einem jeden Optimierungszeitraum $T_{opt}$ innerhalb des Steuerungszeitraums $T_S$ mit allen Nebenbedingungen $V_{min}$, $V_{max}$ ausgeführt.

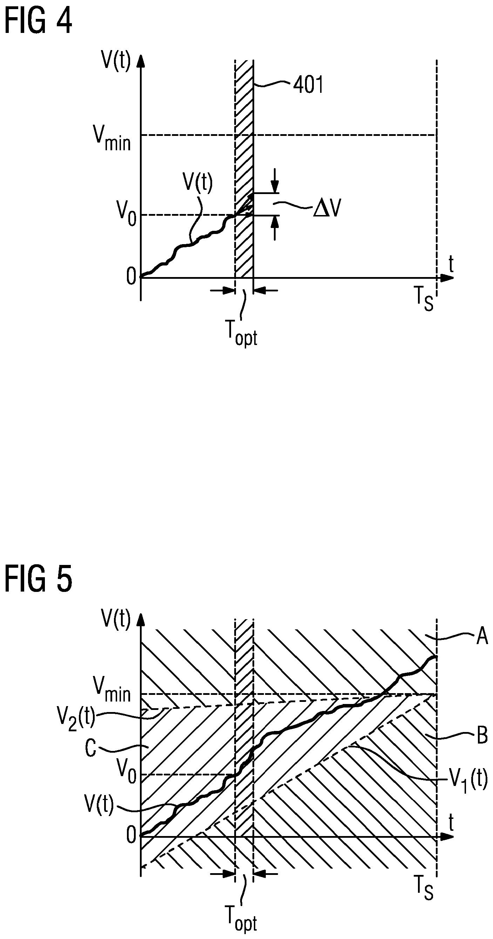

Wie oben bereits ausgeführt, wird der Schritt 111 nur für die Nebenbedingung $V_{min}$ erläutert:
In Schritt 111 wird eine Bewertungsfunktion $X(\Delta V)$ für die Nebenbedingung $V_{min}$ zum Bewerten einer Änderung $\Delta V$ der Systemgröße V(t) zum Ende des jeweiligen Optimierungszeitraums $T_{opt}$ basierend auf einem aktuellen Wert $V_0$ der Systemgröße V(t) zu Beginn $t_0$ des Optimierungszeitraums $T_{opt}$, einem auf die Nebenbedingung $V_{min}$ bezogenen und über den Steuerungszeitraum maximal erzielbaren Gradienten $V_1(t)$ (siehe Fig. 5) der Systemgröße V(t) und einem auf die Nebenbedingung $V_{min}$ bezogenen und über den Steuerungszeitraum $T_S$ minimal erzielbaren Gradienten $V_2(t)$ (siehe Fig. 5) der Systemgröße V(t) aufgestellt.

Der Schritt 111 der Fig. 1 kann umfassen, dass vor dem Aufstellen der Bewertungsfunktion $X(\Delta V)$ solche Änderungen der Systemgröße V(t) ausgeschlossen werden, die einen aufgrund des über den Steuerungszeitraum $T_S$ maximal erzielbaren Gradienten $V_1(t)$ der Systemgröße V(t) und aufgrund des über den Steuerungszeitraum $T_S$ minimal erzielbaren Gradienten $V_2(t)$ der Systemgröße V(t) bestimmten Wert der Systemgröße V(t) bedingen, welcher die Langzeit-Nebenbedingung nicht erfüllt.

Hierzu zeigt die Fig. 4 ein Diagramm zur Illustrierung möglicher Werte der Änderung $\Delta V$ der Systemgröße V(t) nach einem Optimierungszeitraum $T_{opt}$. Die Linie 401 in der Fig. 4 illustriert, dass die Bewertungsfunktion $X(\Delta V)$ nur auf dieser Linie 401 existiert. Der Wertebereich der Bewertungsfunktion $X(\Delta V)$ ist zwischen 0 und 1.

Ferner zeigt hierzu die Fig. 5 ein Diagramm zur Illustrierung der zeitlichen Verläufe der Systemgröße V(t), des maximal erzielbaren Gradienten $V_1(t)$ der Systemgröße V(t) und des minimal erzielbaren Gradienten $V_2(t)$ der Systemgröße V(t) über den Steuerungszeitraum $T_S$. Die beiden Gradienten $V_1(t)$ und $V_2(t)$ sind auf die vorliegend diskutierte Nebenbedingung $V_{min}$ bezogen.

Wenn zu einem Zeitpunkt während des Steuerungszeitraums $T_S$ der Funktionswert der Systemgröße V(t) größer als $V_2(t)$ ist (siehe Bereich A in Fig. 5), so ist sichergestellt, dass die Nebenbedingung $V_{min}$ stets erfüllt ist und nicht mehr gerissen werden kann. Falls aber der Funktionswert der Systemgröße V(t) zu einem Zeitpunkt während des Steuerungszeitraums $T_S$ kleiner als $V_1(t)$ ist, so kann die Nebenbedingung $V_{min}$ nicht mehr erfüllt werden (siehe Bereich B in Fig. 5).

Aus diesen Gründen wird die Bewertungsfunktion X($\Delta$V) vorzugsweise wie folgt aufgestellt:

Die Bewertungsfunktion X($\Delta$V) wird derart aufgestellt, dass ihr Funktionswert gleich 0 ist, wenn basierend auf dem maximal erzielbaren Gradienten $V_1(t)$ der Systemgröße V(t) und basierend auf dem minimal erzielbaren Gradienten $V_2(t)$ der Systemgröße V(t) sichergestellt ist, dass die Nebenbedingung $V_{min}$ ab dem aktuellen Zeitpunkt $t_0$ bis zum Ende des Steuerungszeitraums $T_S$ erfüllt ist (siehe Bereich A in Fig. 5).

Des Weiteren wird die Bewertungsfunktion X($\Delta$V) derart aufgestellt, dass ihr Funktionswert größer als 0 und kleiner gleich 1 ist, wenn basierend auf dem maximal erzielbaren Gradienten $V_1(t)$ der Systemgröße V(t) und basierend auf dem minimal erzielbaren Gradienten $V_2(t)$ der Systemgröße V(t) sichergestellt ist, dass die Nebenbedingung $V_{min}$ ab dem aktuellen Zeitpunkt $t_0$ bis zum Ende des Steuerungszeitraums $T_S$ weiterhin erfüllbar ist (siehe Bereich C in Fig. 5). Mit anderen Worten kann hier die Nebenbedingung noch erfüllt werden, aber auch gerissen werden.

Ferner wird die Bewertungsfunktion X($\Delta$V) derart aufgestellt, dass ihr Funktionswert gleich 1 wäre, wenn basierend auf dem maximal erzielbaren Gradienten $V_1(t)$ der Systemgröße V(t) und basierend auf dem minimal erzielbaren Gradienten $V_2(t)$ der Systemgröße V(t) sichergestellt ist, dass die Nebenbedingung $V_{min}$ ab dem aktuellen Zeitpunkt $t_0$ (zu Beginn des Optimierungszeitraums $T_{opt}$) bis zum Ende des Steuerungszeitraums $T_S$ nicht erfüllbar ist (siehe Bereich B in Fig. 5).

Entsprechend kann die Bewertungsfunktion X($\Delta$V) für das Minimalwertproblem aufgestellt werden durch

$$X(\Delta V) = \begin{cases} \dfrac{V_2\,(t_0 + T_{opt}) - V_0 - \Delta V}{V_2\,(t_0 + T_{opt}) - V_1\,(t_0 + T_{opt})}\,, & falls\ \Delta V < V_1\big(t_0 + T_{opt}\big) - V_0 \\[2ex] 0 \quad , & sonst \end{cases}$$

wobei V die Systemgröße, $\Delta$V die Änderung der Systemgröße, $t_0$ den aktuellen Zeitpunkt, $T_{opt}$ den Optimierungszeitraum, $V_0$ einen aktuellen Wert der Systemgröße, $V_1$ einen über den Steuerungszeitraum maximal erzielbaren Gradienten der Systemgröße und $V_2$ einen über den Steuerungszeitraum minimal erzielbaren Gradienten der Systemgröße bezeichnen.

Ferner wird neben der Einführung der Bewertungsfunktion X($\Delta$V) folgende harte Randbedingung ergänzt:

$$\Delta V \geq V_1\big(t_0 + T_{opt}\big) - V_0$$

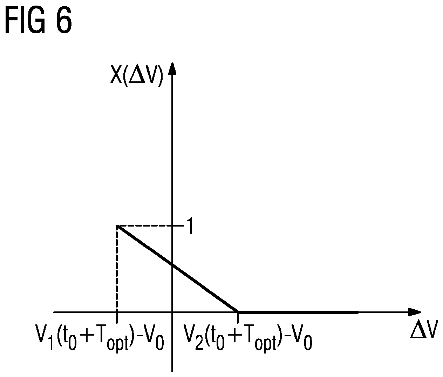

Eine graphische Darstellung dieser Bewertungsfunktion X($\Delta$V) zeigt die Fig. 6.

In Schritt 111 wird ein Optimierungs-Algorithmus zur Minimierung oder Maximierung der Zielfunktion unter Verwendung der aufgestellten Bewertungsfunktionen angewendet, wobei die zumindest eine Systemgröße V(t) als Systemantwort auf die zumindest eine optimierte Steuergröße ermittelt wird.

In Schritt 120 wird die zumindest eine ermittelte optimierte Steuergröße zum Betrieb der steuerbaren Komponenten 21 - 25 eingestellt.

In Fig. 7 ist ein schematisches Ablaufdiagramm eines zweiten Ausführungsbeispiels eines Verfahrens zum Betreiben eines technischen Systems 1 mit einer Anzahl von mittels Steuergrößen steuerbaren Komponenten 21 - 25 während eines eine Vielzahl von Optimierungszeiträumen $T_{opt}$ umfassenden Steuerungszeitraums $T_S$ dargestellt.

Das Verfahren der Fig. 7 umfasst die Schritte 110 und 120 (analog zu Fig. 1), wobei der Schritt 110 den Schritt 111 und den Schritt 112 mit den Teilschritten 112a, 112b und 112c umfasst.

In Schritt 110 wird ein Satz an optimierten Steuergrößen zum jeweiligen Optimierungszeitraum $T_{opt}$ zur Minimierung oder Maximierung der Zielfunktion des Systems 1 derart ermittelt, dass die Systemgröße V(t) die beiden Nebenbedingungen $V_{min}$, $V_{max}$ erfüllt. Die Zielfunktion eines Wassernetzwerks als System 1 ist beispielsweise ein minimaler Energieverbrauch des Wassernetzwerks 1.

In Schritt 111 wird eine Bewertungsfunktion X($\Delta$V) für die Nebenbedingung $V_{min}$ zum Bewerten einer Änderung $\Delta$V der Systemgröße V(t) zum Ende des jeweiligen Optimierungszeitraums $T_{opt}$ basierend auf einem aktuellen Wert $V_0$ der Systemgröße V(t) zu Beginn $t_0$ des Optimierungszeitraums $T_{opt}$, einem auf die Nebenbedingung $V_{min}$ bezogenen und über den Steuerungszeitraum maximal erzielbaren Gradienten $V_1(t)$ (siehe Fig. 5) der Systemgröße V(t) und einem auf die Nebenbedingung $V_{min}$ bezogenen und über den Steuerungszeitraum $T_S$ minimal erzielbaren Gradienten $V_2(t)$ (siehe Fig. 5) der Systemgröße V(t) aufgestellt.

Der Schritt 112 umfasst, wie oben ausgeführt, die Teilschritte 112a, 112b und 112c:

In Schritt 112a wird eine Straffunktion mit der aufgestellten Bewertungsfunktion X($\Delta$V) als Argument aufgestellt.

In Schritt 112b wird die Zielfunktion um die aufgestellte Straffunktion erweitert. Insbesondere wird die Straffunktion der Zielfunktion als Summand hinzugefügt. Die Schritte 112a und 112b werden für jede Bewertungsfunktion $X(\Delta V)$ und damit für jede Langzeit-Nebenbedingung durchgeführt.

In Schritt 112c wird der Optimierungs-Algorithmus auf die erweiterte Zielfunktion angewendet.

Fig. 8 zeigt ein schematisches Blockschaltbild einer Vorrichtung 10 zum Betreiben eines technischen Systems 1 mit einer Anzahl von mittels Steuergrößen steuerbaren Komponenten 21 - 25 während eines eine Vielzahl von Optimierungszeiträumen $T_{opt}$ umfassenden Steuerungszeitraums $T_S$. Das technische System 1 ist beispielsweise ein Wassernetzwerk. Die steuerbaren Komponenten 21 - 25 umfassen beispielsweise Pumpen oder Ventile. Des Weiteren kann das Wassernetzwerk 1 auch nicht-steuerbare Komponenten wie Rohre oder dergleichen umfassen. Ohne Einschränkung der Allgemeinheit zeigt das System 1 der Fig. 8 fünf steuerbare Komponenten 21 - 25. Jeder der steuerbaren Komponenten 21 - 25 ist insbesondere eine oder mehrere Steuergrößen zugeordnet.

Die Vorrichtung 10 umfasst eine erste Einheit 11 und eine zweite Einheit 12. Die erste Einheit 11 ist zum Ermitteln zumindest einer Steuergröße zu einem jeden der Optimierungszeiträume $T_{opt}$ zur Maximierung oder Minimierung einer Zielfunktion des Systems 1 derart eingerichtet, dass zumindest eine Systemgröße $V(t)$ eine Anzahl von vorbestimmten, auf den Steuerungszeitraum $T_S$ bezogenen Nebenbedingungen $V_{min}$, $V_{max}$ erfüllt, wobei das Ermitteln ein Aufstellen einer Bewertungsfunktion $X(\Delta V)$ für eine jede der Nebenbedingungen $V_{min}$, $V_{max}$ zum Bewerten einer Änderung der Systemgröße $V(t)$ zum Ende des Optimierungszeitraums $T_{opt}$ basierend auf einem aktuellen Wert $V_0$ der Systemgröße $V(t)$ zu Beginn des Optimierungszeitraums $T_{opt}$, einem auf die Nebenbedingung $V_{min}$, $V_{max}$ bezogenen und über den Steuerungszeitraum $T_S$ maximal erzielbaren Gradienten $V_1(t)$ der Systemgröße und einem auf die Nebenbedingung $V_{min}$, $V_{max}$ bezogenen und über den Steuerungszeitraum minimal erzielbaren Gradienten $V_2(t)$ der Systemgröße und ein Anwenden eines Optimierungs-Algorithmus zur Minimierung oder Maximierung der Zielfunktion unter Verwendung der aufgestellten Bewertungsfunktionen $X(\Delta V)$ umfasst, wobei die zumindest eine Systemgröße $V(t)$ als Systemantwort auf die zumindest eine optimierte Steuergröße der steuerbaren Komponenten ermittelt wird.

Die zweite Einheit 12 ist dazu eingerichtet, die zumindest eine ermittelte optimierte Steuergröße zum Betrieb der steuerbaren Komponenten einzustellen.

Obwohl die vorliegende Erfindung anhand von Ausführungsbeispielen beschrieben wurde, ist sie vielfältig modifizierbar.

**Patentansprüche**

1. Verfahren zum Betreiben eines technischen Systems (1) mit einer Anzahl von mittels Steuergrößen steuerbaren Komponenten (21 - 25) während eines eine Vielzahl von Optimierungszeiträumen ($T_{opt}$) umfassenden Steuerungszeitraums ($T_S$), mit:

   a) Ermitteln (110) zumindest einer optimierten Steuergröße zu einem jeden der Optimierungszeiträume ($T_{opt}$) zur Minimierung oder Maximierung einer Zielfunktion des Systems (1) derart, dass zumindest eine Systemgröße ($V(t)$) eine Anzahl von vorbestimmten, auf den Steuerungszeitraum ($T_{opt}$) bezogenen Nebenbedingungen ($V_{min}$, $V_{max}$) erfüllt, wobei das Ermitteln umfasst:

      - Aufstellen (111) einer Bewertungsfunktion ($X(\Delta V)$) für eine jede der Nebenbedingungen ($V_{min}$, $V_{max}$) zum Bewerten einer Änderung ($\Delta V$) der Systemgröße ($V(t)$) zum Ende des Optimierungszeitraums ($T_{opt}$) basierend auf einem aktuellen Wert ($V_0$) der Systemgröße ($V(t)$) zu Beginn ($t_0$) des Optimierungszeitraums ($T_{opt}$), einem auf die Nebenbedingung ($V_{min}$, $V_{max}$) bezogenen und über den Steuerungszeitraum ($T_S$) maximal erzielbaren Gradienten ($V_1(t)$) der Systemgröße ($V(t)$) und einem auf die Nebenbedingung ($V_{min}$, $V_{max}$) bezogenen und über den Steuerungszeitraum ($T_S$) minimal erzielbaren Gradienten ($V_2(t)$) der Systemgröße ($V(t)$), und
      - Anwenden (112) eines Optimierungs-Algorithmus zur Minimierung oder Maximierung der Zielfunktion unter Verwendung der aufgestellten Bewertungsfunktionen ($X(\Delta V)$), wobei die zumindest eine Systemgröße $V(t)$ als Systemantwort auf die zumindest eine optimierte Steuergröße der steuerbaren Komponenten (21 - 25) ermittelt wird, und

   b) Einstellen (120) der zumindest einen ermittelten optimierten Steuergröße zum Betrieb der steuerbaren Komponenten (21 - 25) .

2. Verfahren nach Anspruch 1,
   **gekennzeichnet durch**
   Aufstellen (112a) einer Straffunktion mit der aufgestellten Bewertungsfunktion ($X(\Delta V)$) als Argument,

Erweitern (112b) der Zielfunktion um die aufgestellte Straffunktion, und

Anwenden (112c) des Optimierungs-Algorithmus auf die erweiterte Zielfunktion.

3.  Verfahren nach Anspruch 1 oder 2,
    **dadurch gekennzeichnet,**
    **dass** der Wertebereich der Bewertungsfunktion $(X(\Delta V))$ zwischen 0 und 1 liegt.

4.  Verfahren nach einem der Ansprüche 1 - 3,
    **dadurch gekennzeichnet,**
    **dass** die Bewertungsfunktion $(X(\Delta V))$ derart aufgestellt wird, dass ihr Funktionswert gleich 0 ist, wenn basierend auf dem maximal erzielbaren Gradienten $(V_1(t))$ der Systemgröße $(V(t))$ und basierend auf dem minimal erzielbaren Gradienten $(V_2(t))$ der Systemgröße $(V(t))$ sichergestellt ist, dass die Nebenbedingung $(V_{min})$ ab einem aktuellen Zeitpunkt $(t_0)$ bis zum Ende des Steuerungszeitraums $(T_S)$ erfüllt ist.

5.  Verfahren nach einem der Ansprüche 1 - 4,
    **dadurch gekennzeichnet,**
    **dass** die Bewertungsfunktion $(X(\Delta V))$ derart aufgestellt wird, dass ihr Funktionswert größer als 0 und kleiner gleich 1 ist, wenn basierend auf dem maximal erzielbaren Gradienten $(V_1(t))$ der Systemgröße $(V(t))$ und basierend auf dem minimal erzielbaren Gradienten $(V_2(t))$ der Systemgröße $(V(t))$ sichergestellt ist, dass die Nebenbedingung $(V_{min})$ ab dem aktuellen Zeitpunkt $(t_0)$ bis zum Ende des Steuerungszeitraums $(T_S)$ weiterhin erfüllbar ist.

6.  Verfahren nach einem der Ansprüche 1 - 5,
    **dadurch gekennzeichnet,**
    **dass** die Bewertungsfunktion $(X(\Delta V))$ derart aufgestellt wird, dass ihr Funktionswert gleich 1 ist, wenn basierend auf dem maximal erzielbaren Gradienten $(V_1(t))$ der Systemgröße $(V(t))$ und basierend auf dem minimal erzielbaren Gradienten $(V_2(t))$ der Systemgröße $(V(t))$ sichergestellt ist, dass die Nebenbedingung $(V_{min})$ ab einem aktuellen Zeitpunkt $(t_0)$ bis zum Ende des Steuerungszeitraums $(T_S)$ nicht erfüllbar ist.

7.  Verfahren nach einem der Ansprüche 1 - 6,
    **dadurch gekennzeichnet,**
    **dass** die Bewertungsfunktion $(X(\Delta V))$ für das Minimalwertproblem aufgestellt wird durch

$$X(\Delta V) = \begin{cases} \dfrac{V_2\left(t_0 + T_{opt}\right) - V_0 - \Delta V}{V_2\left(t_0 + T_{opt}\right) - V_1\left(t_0 + T_{opt}\right)} \,, & falls\ \Delta V < V_1\left(t_0 + T_{opt}\right) - V_0 \\[2ex] \qquad\qquad 0 \qquad , & sonst \end{cases}$$

wobei V die Systemgröße, $\Delta V$ die Änderung der Systemgröße, $t_0$ den aktuellen Zeitpunkt, $T_{opt}$ den Optimierungszeitraum, $V_0$ einen aktuellen Wert der Systemgröße, $V_1$ einen über den Steuerungszeitraum maximal erzielbaren Gradienten der Systemgröße und $V_2$ einen über den Steuerungszeitraum minimal erzielbaren Gradienten der Systemgröße bezeichnen.

8.  Verfahren nach Anspruch 7,
    **dadurch gekennzeichnet,**
    **dass** neben der Einführung der Bewertungsfunktion $(X(\Delta V))$ eine harte Randbedingung ergänzt wird, welche lautet:

$$\Delta V \geq V_1\left(t_0 + T_{opt}\right) - V_0$$

9.  Verfahren nach einem der Ansprüche 1 - 8,
    **dadurch gekennzeichnet,**
    **dass** die Systemgröße $(V(t))$ einen akkumulierten Wert über den Steuerungszeitraum $(T_S)$ beschreibt.

10. Verfahren nach einem der Ansprüche 1 - 9,
    **dadurch gekennzeichnet,**
    **dass** die Bewertungsfunktion $(X(\Delta V))$ dazu eingerichtet ist, die Nebenbedingung $(V_{min}, V_{max})$ aufgrund der Änderung

($\Delta$V) der akkumulierten Systemgröße (V(t)) in dem Optimierungszeitraum (T$_{opt}$) zu bewerten.

11. Verfahren nach einem der Ansprüche 1 - 10,
    **dadurch gekennzeichnet,**
    **dass** vor dem Aufstellen der Bewertungsfunktion (X($\Delta$V)) solche Änderungen der Systemgröße (V(t)) ausgeschlossen werden, die einen aufgrund des über den Steuerungszeitraum (T$_S$) maximal erzielbaren Gradienten (V$_1$(t)) der Systemgröße (V(t)) und aufgrund des über den Steuerungszeitraum (T$_S$) minimal erzielbaren Gradienten (V$_2$(t)) der Systemgröße (V(t)) bestimmten Wert der Systemgröße (V(t)) bedingen, welcher die Nebenbedingung (V$_{min}$, V$_{max}$) nicht erfüllt.

12. Verfahren nach einem der Ansprüche 1 - 11,
    **dadurch gekennzeichnet,**
    **dass** das technische System (1) eine netzwerkartige Anlage, ein Energieversorgungsnetzwerk oder ein Wassernetz ist.

13. Verfahren nach einem der Ansprüche 1 - 12,
    **dadurch gekennzeichnet,**
    **dass** die Anzahl von steuerbaren Komponenten (21 - 25) ein Ventil und/oder eine Pumpe umfasst oder dass die Anzahl von steuerbaren Komponenten einen Umrichter, einen Transformator, ein Kraftwerk und/oder Umspannwerk umfasst.

14. Computerprogrammprodukt, welches auf einer programmgesteuerten Einrichtung die Durchführung des Verfahrens nach einem der Ansprüche 1 - 13 veranlasst.

15. Vorrichtung (10) zum Betreiben eines technischen Systems (1) mit einer Anzahl von mittels Steuergrößen steuerbaren Komponenten (21 - 25) während eines eine Vielzahl von Optimierungszeiträumen (T$_{opt}$) umfassenden Steuerungszeitraums (T$_S$), mit:

    a) einer ersten Einheit (11) zum Ermitteln zumindest einer Steuergröße zu einem jeden der Optimierungszeiträume (T$_{opt}$) zur Maximierung oder Minimierung einer Zielfunktion des Systems (1) derart, dass zumindest eine Systemgröße (V(t)) eine Anzahl von vorbestimmten, auf den Steuerungszeitraum (T$_S$) bezogenen Nebenbedingungen (V$_{min}$, V$_{max}$) erfüllt, wobei das Ermitteln ein Aufstellen einer Bewertungsfunktion X($\Delta$V) für eine jede der Nebenbedingungen (V$_{min}$, V$_{max}$) zum Bewerten einer Änderung der Systemgröße (V(t)) zum Ende des Optimierungszeitraums (T$_{opt}$) basierend auf einem aktuellen Wert (V$_0$) der Systemgröße (V(t)) zu Beginn des Optimierungszeitraums (T$_{opt}$), einem auf die Nebenbedingung (V$_{min}$, V$_{max}$) bezogenen und über den Steuerungszeitraum (T$_S$) maximal erzielbaren Gradienten (V$_1$(t)) der Systemgröße (V(t)) und einem auf die Nebenbedingung (V$_{min}$, V$_{max}$) bezogenen und über den Steuerungszeitraum (T$_S$) minimal erzielbaren Gradienten V$_2$(t) der Systemgröße und ein Anwenden eines Optimierungs-Algorithmus zur Minimierung oder Maximierung der Zielfunktion unter Verwendung der aufgestellten Bewertungsfunktionen (X($\Delta$V)) umfasst, wobei die zumindest eine Systemgröße V(t) als Systemantwort auf die zumindest eine optimierte Steuergröße der steuerbaren Komponenten ermittelt wird, und
    b) einer zweiten Einheit (12) zum Einstellen der zumindest einen ermittelten optimierten Steuergröße (V(t)) zum Betrieb der steuerbaren Komponenten (21 - 25).

**Claims**

1. Method for operating a technical system (1) having a number of components (21-25), controllable by means of controlled variables, during a control period (T$_S$) comprising a multiplicity of optimization periods (T$_{opt}$), involving:

    a) ascertaining (110) at least one optimized controlled variable for each of the optimization periods (T$_{opt}$) for minimizing or maximizing a target function of the system (1) such that at least one system variable (V(t)) satisfies a number of predetermined secondary conditions (V$_{min}$, V$_{max}$) referenced to the control period (T$_{opt}$), wherein the ascertaining comprises:

    - specifying (111) a rating function (X($\Delta$V)) for each of the secondary conditions (V$_{min}$, V$_{max}$) for rating a change ($\Delta$V) in the system variable (V(t)) at the end of the optimization period (T$_{opt}$) based on a present value (V$_0$) of the system variable (V(t)) at the beginning (t$_0$) of the optimization period (T$_{opt}$), a gradient

($V_1$(t)) of the system variable (V(t)) that is referenced to the secondary condition ($V_{min}$, $V_{max}$) and attainable as a maximum over the control period ($T_s$) and a gradient ($V_2$(t)) of the system variable (V(t)) that is referenced to the secondary condition ($V_{min}$, $V_{max}$) and attainable as a minimum over the control period ($T_s$), and
- applying (112) an optimization algorithm for minimizing or maximizing the target function using the specified rating functions (X($\Delta V$)), wherein the at least one system variable V(t) is ascertained as a system response to the at least one optimized controlled variable of the controllable components (21-25), and

b) adjusting (120) the at least one ascertained optimized controlled variable for operation of the controllable components (21-25).

2. Method according to Claim 1,
**characterized by**
specifying (112a) a penalty function with the specified rating function (X($\Delta V$)) as an argument,
extending (112b) the target function by the specified penalty function, and
applying (112c) the optimization algorithm to the extended target function.

3. Method according to Claim 1 or 2,
**characterized**
**in that** the value range of the rating function (X($\Delta V$)) is between 0 and 1.

4. Method according to one of Claims 1-3,
**characterized**
**in that** the rating function (X($\Delta V$)) is specified such that its function value is equal to 0 if, based on the maximum attainable gradient ($V_1$(t)) of the system variable (V(t)) and based on the minimum attainable gradient ($V_2$(t)) of the system variable (V(t)), it is certain that the secondary condition ($V_{min}$) is satisfied from a present time ($t_0$) to the end of the control period ($T_s$).

5. Method according to one of Claims 1-4,
**characterized**
**in that** the rating function (X($\Delta V$)) is specified such that its function value is greater than 0 and less than or equal to 1 if, based on the maximum attainable gradient ($V_1$(t)) of the system variable (V(t)) and based on the minimum attainable gradient ($V_2$(t)) of the system variable (V(t)), it is certain that the secondary condition ($V_{min}$) continues to be satisfiable from the present time ($t_0$) to the end of the control period ($T_s$).

6. Method according to one of Claims 1-5,
**characterized**
**in that** the rating function (X($\Delta V$)) is specified such that its function value is equal to 1 if, based on the maximum attainable gradient ($V_1$(t)) of the system variable (V(t)) and based on the minimum attainable gradient ($V_2$(t)) of the system variable (V(t)), it is certain that the secondary condition ($V_{min}$) is not satisfiable from a present time ($t_0$) to the end of the control period ($T_s$).

7. Method according to one of Claims 1-6,
**characterized**
**in that** the rating function (X($\Delta V$)) for the minimum value problem is specified by

$$X(\Delta V) = \begin{cases} \dfrac{V_2\big(t_0 + T_{opt}\big) - V_0 - \Delta V}{V_2\big(t_0 + T_{opt}\big) - V_1^{t_0 + T_{opt}}}, & if\ \Delta V <\ V_1\big(t_0 + T_{opt}\big) - V_0 \\ 0\,, & otherwise \end{cases}$$

wherein V denotes the system variable, $\Delta V$ denotes the change in the system variable, $t_0$ denotes the present time, $T_{opt}$ denotes the optimization period, $V_0$ denotes a present value of the system variable, $V_1$ denotes a gradient of the system variable attainable as a maximum over the control period and $V_2$ denotes a gradient of the system variable attainable as a minimum over the control period.

8. Method according to Claim 7,
**characterized**

**in that** besides the introduction of the rating function (X(ΔV)), a hard constraint is added that is:

$$\Delta V \geq V_1\big(t_0 + T_{opt}\big) - V_0$$

**9.** Method according to one of Claims 1-8,
**characterized**
**in that** the system variable (V(t)) describes an accumulated value over the control period ($T_s$).

**10.** Method according to one of Claims 1-9,
**characterized**
**in that** the rating function (X(ΔV)) is set up to rate the secondary condition ($V_{min}$, $V_{max}$) on the basis of the change (ΔV) in the accumulated system variable (V(t)) in the optimization period ($T_{opt}$).

**11.** Method according to one of Claims 1-10,
**characterized**
**in that** before the specification of the rating function (X(ΔV)), such changes in the system variable (V(t)) as necessitate a value of the system variable (V(t)), determined on the basis of the gradient ($V_1$(t)) of the system variable (V(t)) attainable as a maximum over the control period ($T_s$) and on the basis of the gradient ($V_2$(t)) of the system variable (V(t)) attainable as a minimum over the control period ($T_s$), that does not satisfy the secondary condition ($V_{min}$, $V_{max}$) are excluded.

**12.** Method according to one of Claims 1-11,
**characterized**
**in that** the technical system (1) is a network-like installation, a power supply network or a water mains.

**13.** Method according to one of Claims 1-12,
**characterized**
**in that** the number of controllable components (21-25) comprises a valve and/or a pump or in that the number of controllable components comprises a converter, a transformer, a power station and/or a transformer substation.

**14.** Computer program product that prompts the performance of the method according to one of Claims 1-13 on a program-controlled device.

**15.** Apparatus (10) for operating a technical system (1) having a number of components (21-25), controllable by means of controlled variables, during a control period ($T_s$) comprising a multiplicity of optimization periods ($T_{opt}$), having:

a) a first unit (11) for ascertaining at least one controlled variable for each of the optimization periods ($T_{opt}$) for maximizing or minimizing a target function of the system (1) such that at least one system variable (V(t)) satisfies a number of predetermined secondary conditions ($V_{min}$, $V_{max}$) referenced to the control period ($T_s$), wherein the ascertaining comprises specifying a rating function X(ΔV) for each of the secondary conditions ($V_{min}$, $V_{max}$) for rating a change in the system variable (V(t)) at the end of the optimization period ($T_{opt}$) based on a present value ($V_0$) of the system variable (V(t)) at the beginning of the optimization period ($T_{opt}$), a gradient ($V_1$(t)) of the system variable (V(t)) that is referenced to the secondary condition ($V_{min}$, $V_{max}$) and attainable as a maximum over the control period ($T_s$) and a gradient $V_2$(t) of the system variable that is referenced to the secondary condition ($V_{min}$, $V_{max}$) and attainable as a minimum over the control period ($T_s$), and applying an optimization algorithm for minimizing or maximizing the target function using the specified rating functions (X(ΔV)), wherein the at least one system variable V(t) is ascertained as a system response to the at least one optimized controlled variable of the controllable components, and
b) a second unit (12) for adjusting the at least one ascertained optimized controlled variable (V(t)) for operation of the controllable components (21-25).

**Revendications**

**1.** Procédé destiné à faire fonctionner un système (1) technique avec un certain nombre de composants (21 - 25) pouvant être commandés au moyen de grandeurs de commande pendant une période de commande ($T_s$) compre-

nant une multiplicité de périodes d'optimisation ($T_{opt}$), avec :

a) la détermination (110) d'au moins une grandeur de commande optimisée pour chacune des périodes d'optimisation ($T_{opt}$) en vue de la minimisation ou de la maximisation d'une fonction cible du système (1) de sorte qu'au moins une grandeur du système ($V(t)$) respecte un certain nombre de conditions annexes ($V_{min}$, $V_{max}$) prédéfinies rapportées à la période d'optimisation ($T_{opt}$), la détermination comprenant :

- la formulation (111) d'une fonction d'évaluation ($X(\Delta V)$) pour chacune des conditions annexes ($V_{min}$, $V_{max}$) en vue de l'évaluation d'une variation ($\Delta V$) de la grandeur du système ($V(t)$) à la fin de la période d'optimisation ($T_{opt}$) sur la base d'une valeur actuelle ($V_0$) de la grandeur du système ($V(t)$) au début ($t_0$) de la période d'optimisation ($T_{opt}$), d'un gradient ($V_1(t)$) de la grandeur du système ($V(t)$) rapporté à la condition annexe ($V_{min}$, $V_{max}$) pouvant être atteint au maximum pendant la période de commande ($T_s$), et d'un gradient ($V_2(t)$) de la grandeur du système ($V(t)$) rapporté à la condition annexe ($V_{min}$, $V_{max}$) et pouvant être atteint au minimum pendant la période de commande ($T_s$)
- l'application (112) d'un algorithme d'optimisation en vue de la minimisation ou de la maximisation de la fonction cible avec utilisation des fonctions d'évaluation ($X(\Delta V)$) formulées, l'au moins une grandeur du système ($V(t)$) étant déterminée en tant que réponse du système à l'au moins une grandeur de commande optimisée des composants (21 - 25) pouvant être commandés, et

b) le réglage (120) de l'au moins une grandeur de commande optimisée déterminée, en vue du fonctionnement des composants (21 - 25) pouvant être commandés.

2. Procédé selon la revendication 1,
   **caractérisé par**
   la formulation (112a) d'une fonction de pénalité avec la fonction d'évaluation ($X(\Delta V)$) formulée en tant qu'argument,
   l'élargissement (112b) de la fonction cible avec la fonction de pénalité formulée,
   l'application (112c) de l'algorithme d'optimisation à la fonction cible élargie.

3. Procédé selon la revendication 1 ou 2,
   **caractérisé en ce que**
   la plage de valeurs de la fonction d'évaluation ($X(\Delta V)$) est située entre 0 et 1.

4. Procédé selon l'une des revendications 1 - 3,
   **caractérisé en ce que**
   la fonction d'évaluation ($X(\Delta V)$) est formulée de telle sorte que sa valeur de fonction est égale à 0 si, sur la base du gradient ($V_1(t)$) de la grandeur du système ($V(t)$) pouvant être atteint au maximum et sur la base du gradient ($V_2(t)$) de la grandeur du système ($V(t)$) pouvant être atteint au minimum, il est garanti que la condition annexe ($V_{min}$) est respectée à partir d'un instant actuel ($t_0$) jusqu'à la fin de la période de commande ($T_s$).

5. Procédé selon l'une des revendications 1 - 4,
   **caractérisé en ce que** la fonction d'évaluation ($X(\Delta V)$) est formulée de telle sorte que sa valeur de fonction est supérieure à 0 et inférieure ou égale à 1 si, sur la base du gradient ($V_1(t)$) de la grandeur du système ($V(t)$) pouvant être atteint au maximum et sur la base du gradient ($V_2(t)$) de la grandeur du système ($V(t)$) pouvant être atteint au minimum, il est garanti que la condition annexe ($V_{min}$) peut encore être respectée à partir de l'instant actuel ($t_0$) jusqu'à la fin de la période de commande ($T_s$).

6. Procédé selon l'une des revendications 1 - 5,
   **caractérisé en ce que** la fonction d'évaluation ($X(\Delta V)$) est formulée de telle sorte que sa valeur de fonction est égale à 1 si, sur la base du gradient ($V_1(t)$) de la grandeur du système ($V(t)$) pouvant être atteint au maximum et sur la base du gradient ($V_2(t)$) de la grandeur du système ($V(t)$) pouvant être atteint au minimum, il est garanti que la condition annexe ($V_{min}$) ne peut pas être respectée à partir d'un instant actuel ($t_0$) jusqu'à la fin de la période de commande ($T_s$).

7. Procédé selon l'une des revendications 1 - 6,
   **caractérisé en ce que**
   la fonction d'évaluation ($X(\Delta V)$) pour le problème de la valeur minimale est formulée par

$$X(\Delta V) = \begin{cases} \dfrac{V_2\,(t_0 + T_{opt}) - V_0 - \Delta V}{V_2\,(t_0 + T_{opt}) - V_1\,(t_0 + T_{opt})} \;, & si\ \Delta V < V_1\big(t_0 + T_{opt}\big) - V_0 \\[2em] 0 \quad, & sinon \end{cases}$$

où V désigne la grandeur du système, $\Delta V$ la variation de la grandeur du système, $t_0$ l'instant actuel, $T_{opt}$ la période d'optimisation, $V_0$ une valeur actuelle de la grandeur du système, $V_1$ un gradient de la grandeur du système pouvant être atteint au maximum pendant la période de commande et $V_2$ un gradient de la grandeur du système pouvant être atteint au minimum pendant la période de commande.

8. Procédé selon la revendication 7,
**caractérisé en ce que**,
outre l'introduction de la fonction d'évaluation (X($\Delta V$)), une condition marginale dure est complétée, laquelle se présente comme suit :

$$\Delta V \geq V_1\big(t_0 + T_{opt}\big) - V_0$$

9. Procédé selon l'une des revendications 1 - 8,
**caractérisé en ce que**
la grandeur du système (V(t)) décrit une valeur accumulée pendant la période de commande ($T_s$).

10. Procédé selon l'une des revendications 1 - 9,
**caractérisé en ce que**
la fonction d'évaluation (X($\Delta V$)) est aménagée pour évaluer la condition annexe ($V_{min}$, $V_{max}$) sur la base de la variation ($\Delta V$) de la grandeur du système (V(t)) accumulée dans la période d'optimisation ($T_{opt}$).

11. Procédé selon l'une des revendications 1 - 10,
**caractérisé en ce que**,
avant la formulation de la fonction d'évaluation (X($\Delta V$)), sont exclues les variations de la grandeur du système (V(t)) qui impliquent une valeur de la grandeur du système (V(t)) qui est définie en raison du gradient ($V_1$(t)) de la grandeur du système (V(t)) pouvant être atteint au maximum pendant la période de commande ($T_s$) et en raison du gradient ($V_2$(t)) de la grandeur du système (V(t)) pouvant être atteint au minimum pendant la période de commande ($T_s$), laquelle valeur ne respecte pas la condition annexe ($V_{min}$, $V_{max}$).

12. Procédé selon l'une des revendications 1 - 11,
**caractérisé en ce que**
le système (1) technique est une installation du type réseau, un réseau d'alimentation en énergie ou un réseau d'eau.

13. Procédé selon l'une des revendications 1 - 12,
**caractérisé en ce que**
le nombre de composants (21 - 25) pouvant être commandés comprend une vanne et/ou une pompe, ou **en ce que** le nombre de composants pouvant être commandés comprend un convertisseur, un transformateur, une centrale et/ou un poste de transformation.

14. Produit de programme informatique, lequel entraîne, sur un équipement commandé par programme, la réalisation du procédé selon l'une des revendications 1 - 13.

15. Dispositif (10) destiné à faire fonctionner un système (1) technique avec un certain nombre de composants (21 - 25) pouvant être commandés au moyen de grandeurs de commande pendant une période de commande ($T_s$) comprenant un certain nombre de périodes d'optimisation ($T_{opt}$), avec :

a) une première unité (11) destinée à déterminer au moins une grandeur de commande pour chacune des périodes d'optimisation ($T_{opt}$) en vue de la minimisation ou de la maximisation d'une fonction cible du système (1) de sorte qu'au moins une grandeur du système (V(t)) respecte un certain nombre de conditions annexes ($V_{min}$, $V_{max}$) prédéfinies rapportées à la période de commande ($T_s$), la détermination comprenant une formulation d'une fonction d'évaluation (X($\Delta$V)) pour chacune des conditions annexes (V$_{min}$, V$_{max}$) en vue de l'évaluation d'une variation de la grandeur du système (V(t)) à la fin de la période d'optimisation (T$_{opt}$) sur la base d'une valeur actuelle (V$_0$) de la grandeur du système (V(t)) au début de la période d'optimisation (T$_{opt}$), d'un gradient (V$_1$(t)) de la grandeur du système (V(t)) rapporté à la condition annexe (V$_{min}$, V$_{max}$) et pouvant être atteint au maximum pendant la période de commande (T$_s$), et d'un gradient (V$_2$(t)) de la grandeur du système (V(t)) rapporté à la condition annexe (V$_{min}$, V$_{max}$) et pouvant être atteint au minimum pendant la période de commande (T$_s$), et une application d'un algorithme d'optimisation en vue de la minimisation ou de la maximisation de la fonction cible avec utilisation des fonctions d'évaluation (X($\Delta$V)) formulées, l'au moins une grandeur du système (V(t)) étant déterminée en tant que réponse du système à l'au moins une grandeur de commande optimisée des composants pouvant être commandés, et

b) avec une deuxième unité (12) destinée au réglage de l'au moins une grandeur de commande (V(t)) optimisée déterminée en vue du fonctionnement des composants (21 - 25) pouvant être commandés.

FIG 1

FIG 2

FIG 3

FIG 4

FIG 5

## FIG 6

FIG 7

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ANDREWS M et al.** Optimal utility based multi-user throughput allocation subject to throughput constraints. *INFOCOM,* 2005, ISBN 978-0-7803-8968-7

- Calculating a near time-optimal jerk-constrained trajectory along a specified smooth path. **JAN MATTMÜLLER et al.** THE INTERNATIONAL JOURNAL OF ADVANCED MANUFACTURING TECHNOLOGY. SPRINGER, 19. April 2009, vol. 45